# EUROPÄISCHE PATENTANMELDUNG

(11) **EP 3 892 863 A1**
(43) Veröffentlichungstag der Anmeldung: **13.10.2021**
(21) Anmeldenummer: 20169134.2
(22) Anmeldetag: 09.04.2020
(51) Int. Cl.: F04D 29/46, F04D 29/42, F04D 27/02, F04D 29/62

(54) **VERDICHTER, EINE AKTUATORANORDNUNG FÜR DEN VERDICHTER UND EIN VERFAHREN ZUR MONTAGE DES VERDICHTERS**

(71) Anmelder: BMTS Technology GmbH & Co. KG, 70376 Stuttgart (DE); Swoboda Wiggensbach KG, 87487 Wiggensbach (DE)
(72) Erfinder: GEBHARDT, Till, 70192 Stuttgart (DE); HOLLMANN, Christoph, 71642 Ludwigsburg (DE); JANISCH, Werner, 88696 Owingen (DE); KÜSTERMANN, Stephan, 70376 Stuttgart (DE); NIBLER, Simon, 73614 Schomdorf (DE); WACHTER, Stefan, 87448 Waltenhofen (DE); WEISS, Hartmut, 70569 Stuttgart (DE); WEIXLER, Svenja, 87347 Kempten (DE)
(74) Vertreter: BRP Renaud & Partner mbB Rechtsanwälte Patentanwälte Steuerberater

(57) **Zusammenfassung**

Die Erfindung betrifft einen Verdichter (1) zum Verdichten von Ladeluft für einen Verbrennungsmotor oder eine Brennstoffzelle. Der Verdichter (1) weist ein Verdichtergehäuse (2) auf, in dem ein Ladeluftdurchlass (5) ausgebildet ist. Der Verdichter (1) weist auch eine Verstellvorrichtung (6) mit einer in dem Ladeluftdurchlass (5) angeordneten Verstelleinheit (7) und mit einer Aktuatoranordnung (20) auf. Die Aktuatoranordnung (20) weist einen an dem Verdichtergehäuse (2) angeordneten Aktuator (8) und eine Wirkstange (12) auf. Der Aktuator (8) und die Verstelleinheit (7) wirken über die Wirkstange (12) zusammen, die aus dem Aktuator (8) in das Verdichtergehäuse (2) hinein zu der Verstelleinheit (7) geführt ist. Der Aktuator (8) kann die Verstelleinheit (7) über die Wirkstange (12) in mehrere verschiedene Stellungen verstellen, in denen der durchströmbare Querschnitt des Ladeluftdurchlasses (5) unterschiedlich ist.

Erfindungsgemäß weist die Verstellvorrichtung (6) wenigstens eine Lagerstelle (14) auf, die innerhalb des Verdichtergehäuses (2) angeordnet ist und die Wirkstange (12) aufnimmt.

Die Erfindung betrifft auch eine Aktuatoranordnung (20) mit dem Aktuator (8) und der Wirkstange (12). Die Erfindung betrifft auch ein Verfahren zur Montage des Verdichters (1).

## Beschreibung

Die Erfindung betrifft einen Verdichter zum Verdichten von Ladeluft für einen Verbrennungsmotor oder eine Brennstoffzelle nach dem Oberbegriff des Anspruchs 1. Die Erfindung betrifft auch eine Aktuatoranordnung für den Verdichter. Die Erfindung betrifft auch ein Verfahren zur Montage des Verdichters.

Ein gattungsgemäßer Verdichter - wie beispielweise aus DE 10 2018 217 510.1 bekannt- umfasst ein Verdichtergehäuse, das von einem Einlass zu einem Auslass von Luft durchströmbar ist. In dem Verdichtergehäuse ist ein Verdichterrad aufgenommen, das die strömende Luft verdichtet. Um den Kennfeldbereich des Verdichters über seine Pumpgrenze hinaus zu erweitern, kann eine Verstellvorrichtung eingesetzt werden. Die Verstellvorrichtung umfasst üblicherweise eine Verstelleinheit und einen Aktuator, die über eine Stange miteinander zusammenwirken. Die Verstelleinheit ist dabei in dem Verdichtergehäuse aufgenommen und ändert den durchströmbaren Querschnitt des Verdichtergehäuses je nach ihrer Stellung. Dadurch können insbesondere die begrenzenden Effekte verringert oder vermieden werden. Der Aktuator ist außerhalb des Verdichtergehäuses angeordnet und kann über die Stange die Verstelleinheit in die jeweilige Stellung aktiv verstellen. Die Stange wird dabei aus dem Aktuator durch einen Durchbruch in dem Verdichtergehäuse zu der Verstelleinheit geführt.

Im Betrieb des Verdichters können jedoch negative Effekte auftreten. So könnte beispielweise die Stange kippen und dadurch die Verstellgenauigkeit der Verstellvorrichtung und dadurch die Funktion des Verdichters gestört werden. Ferner ist aufgrund des begrenzten Bauraums im Verdichter eine komplexe Geometrie notwendig, um die Stange zu der Verstelleinheit führen zu können. Aufgrund der komplexen Geometrie kann die Verstellgenauigkeit der Verstellvorrichtung auf gleiche Weise gestört werden. Auch die Montage des Verdichters ist dadurch komplex und aufwendig.

Die Aufgabe der Erfindung ist es daher, für einen Verdichter der gattungsgemäßen Art eine verbesserte oder zumindest alternative Ausführungsform anzugeben, bei der die beschriebenen Nachteile überwunden werden. Insbesondere soll die Verstellgenauigkeit der Verstellvorrichtung verbessert und die Funktion des Verdichters sichergestellt werden. Die Aufgabe der Erfindung ist es auch, eine entsprechende Aktuatoranordnung und ein entsprechendes Verfahren zur Montage des Verdichters bereitzustellen.

Diese Aufgaben werden erfindungsgemäß durch den Gegenstand der unabhängigen Ansprüche gelöst. Vorteilhafte Ausführungsformen sind Gegenstand der abhängigen Ansprüche.

Ein Verdichter ist zum Verdichten von Ladeluft für einen Verbrennungsmotor oder eine Brennstoffzelle vorgesehen. Der Verdichter weist ein Verdichtergehäuse auf, in dem ein von Ladeluft in Strömungsrichtung durchströmbarer Ladeluftdurchlass ausgebildet ist. Der Verdichter weist zudem eine Verstellvorrichtung mit einer Verstelleinheit und mit einer Aktuatoranordnung auf. Die Aktuatoranordnung weist dabei einen Aktuator und eine Wirkstange auf. Die Verstelleinheit ist dabei in dem Ladeluftdurchlass quer zur Strömungsrichtung und der Aktuator ist an dem Verdichtergehäuse angeordnet. Der Aktuator und die Verstelleinheit wirken über die Wirkstange zusammen, die aus dem Aktuator quer zur Strömungsrichtung in das Verdichtergehäuse hinein zu der Verstelleinheit geführt ist. Der Aktuator kann die Verstelleinheit über die Wirkstange in mehrere verschiedene Stellungen verstellen, in denen der durchströmbare Querschnitt des Ladeluftdurchlasses unterschiedlich ist. Erfindungsgemäß weist die Verstellvorrichtung wenigstens eine Lagerstelle auf, die innerhalb des Verdichtergehäuses angeordnet ist und die Wirkstange aufnimmt.

Durch die Lagerstelle wird die Wirkstange radial geführt und ein Kippen der Wirkstange in dem Verdichtergehäuse kann verhindert werden. Dadurch können die Verstellgenauigkeit der Verstellvorrichtung verbessert und die Funktion des Verdichters sichergestellt werden. Der Aktuator kann dabei entweder außen an dem Verdichtergehäuse oder zumindest bereichsweise innerhalb eines von dem Verdichtergehäuse gebildeten Aufnahmebereichs des Verdichtergehäuses angeordnet sein. Vorteilhafterweise kann der Aktuator in dem Aufnahmebereich des Verdichtergehäuses bereichsweise aufgenommen sein. Vorteilhafterweise können an dem Aktuatorgehäuse ein umlaufender Aktuatorflansch und an dem Verdichtergehäuse ein Verdichterflansch ausgebildet sein. Der Aktuator liegt dann mit seinem Aktuatorflansch an dem Verdichterflansch an. Ist der Aktuator in dem Aufnahmebereich des Verdichtergehäuses bereichsweise aufgenommen, so kann der Verdichterflansch an dem Aufnahmebereich und der Aktuatorflansch zu Axialenden des Aktuatorgehäuses versetzt ausgebildet sein.

Vorteilhafterweise kann ein Aktuatorgehäuse des Aktuators mit einem Bodenbereich an dem Verdichtergehäuse anliegen. Die wenigstens eine Lagerstelle kann dann an dem Bodenbereich des Aktuatorgehäuses angeordnet sein und in das Verdichtergehäuse hineinragen. Die wenigstens eine Lagerstelle im Bodenbereich des Aktuators kann das Führen der Wirkstange vereinfachen und dadurch kann die Verstellgenauigkeit der Verstellvorrichtung verbessert werden. Vorteilhafterweise kann der Aktuator eine Führungshülse umfassen, die die Lagerstelle ummantelt und mit der ummantelten Lagerstelle aus dem Aktuatorgehäuse im Bodenbereich hinausragt.

Das Aktuatorgehäuse kann vorteilhafterweise aus einer Hülse aus einem ferromagnetischen Material und einem auf die Hülse angespritzten Gehäuseteil aus Kunststoff bestehen. Das Gehäuseteil kann dabei die Hülse axial in Bezug auf die Wirkstange bereichsweise ummanteln, so dass der Aktuator nach außen bereichsweise durch das Gehäuseteil und bereichsweise durch die Hülse abgegrenzt ist. Der Bodenbereich des Aktuatorgehäuses kann dann durch die Hülse gebildet sein, aus der die Führungshülse mit der ummantelten Lagerstelle hinausragt. Der oben beschriebene Aktuatorflansch kann dann an dem Gehäuseteil integral ausgebildet sein. Alternativ kann das Gehäuseteil aus Kunststoff die Hülse aus einem ferromagnetischen Material vollständig ummanteln. Der Bodenbereich des Aktuatorgehäuses kann dann durch das Gehäuseteil gebildet sein, aus dem die Führungshülse mit der ummantelten Lagerstelle hinausragt.

Vorteilhafterweise kann die wenigstens eine Lagerstelle in Form einer Lagerbuchse ausgeführt sein. Die Lagerbuchse kann dann an einem dem Aktuator gegenüberliegenden Axialende der Wirkstange diese umlaufend aufnehmen. Alternativ oder zusätzlich kann die wenigstens eine Lagerstelle in Form einer Lagerbuchse ausgeführt sein, die zwischen dem Aktuator und einem dem Aktuator gegenüberliegenden Axialende der Wirkstange diese umlaufend aufnimmt. Es versteht sich, dass die Verstellvorrichtung mehrere zueinander abweichend ausgestaltete Lagerbuchsen aufweisen kann.

Vorteilhafterweise kann die Lagerbuchse mit der Wirkstange festverbunden oder auf der Wirkstange ausgebildet sein. Die Lagerbuchse ist dann in dem Verdichtergehäuse mit der Wirkstange verschiebbar angeordnet. So kann die Lagerbuchse auf die Wirkstange beispielweise aufgepresst oder mit der Wirkstange verspannt oder einteilig mit der Wirkstange ausgebildet sein. Bei der Montage des Verdichters kann dann die Lagerbuchse zusammen mit der Wirkstange in den vorgesehenen Durchbruch des Verdichtergehäuses eingeführt werden. Alternativ kann die Lagerbuchse mit dem Verdichtergehäuse festverbunden oder in dem Verdichtergehäuse ausgebildet sein. Die Wirkstange ist dann in der Lagerbuchse verschiebbar angeordnet. Bei der Montage des Verdichters kann dann die Wirkstange in den vorgesehenen Durchbruch des Verdichtergehäuses und gleichzeitig in die Lagerbuchse eingeführt werden.

Bei einer vorteilhaften Ausführungsform des Verdichters ist vorgesehen, dass die Verstelleinheit und die Wirkstange einen axialen Versatz zueinander aufweisen. Die Verstellvorrichtung umfasst dann eine Koppelstange, die parallel zur Strömungsrichtung und senkrecht zur Wirkstange ausgerichtet ist. Die Koppelstange verbindet dabei die Wirkstange und die Verstelleinheit wirkend miteinander. Mit anderen Worten kompensiert die Koppelstange den axialen Versatz zwischen der Verstelleinheit und der Wirkstange. Die Koppelstange kann dabei einseitig mit der Wirkstange festverbunden - beispielweise verschraubt - sein und andersseitig in eine Öffnung der Verstelleinheit eingreifen. Durch die Koppelstange kann der Verdichter kompakter ausgeführt sein, da insbesondere der Aktuator axial in Bezug auf die Strömungsrichtung zu der Verstelleinheit versetzt an dem Verdichter angeordnet werden kann. Dadurch kann insgesamt die Verstellvorrichtung kompakter bzw. die Wirkstange kürzer ausgeführt sein und die Verstellgenauigkeit der Verstellvorrichtung verbessert werden.

Vorteilhafterweise kann vorgesehen sein, dass die Wirkstange über eine Nut-Feder-Verbindung drehfest und quer zur Strömungsrichtung verschiebbar in dem Aktuator gelagert ist. Alternativ oder zusätzlich kann die Koppelstange über eine Führung in dem Verdichtergehäuse kippsicher angeordnet sein und dadurch die Wirkstange drehfest und quer zur Strömungsrichtung verschiebbar in dem Verdichtergehäuse gelagert sein. Dadurch kann ein Kippen der Wirkstange bei der Montage und im Betrieb des Verdichters verhindert werden und die Funktion des Verdichters sichergestellt werden.

Die Erfindung betrifft auch eine Aktuatoranordnung für den oben beschriebenen Verdichter. Die Aktuatoranordnung umfasst dabei den Aktuator und die Wirkstange, die mit einem Axialende in ein Aktuatorgehäuse des Aktuators hineinragt. Auf dem Axialende der Wirkstange ist ein Permanentmagnet befestigt. Der Aktuator weist wenigstens zwei Spulen auf. Die Spulen sind zweckgemäß in Reihe elektrisch miteinander verschaltet und wirken im bestromten Zustand des Aktuators miteinander und mit dem Permanentmagneten zusammen, so dass die Wirkstange entlang ihrer Längsmittelachse verstellbar ist. Dabei erzeugen die Spulen im bestromten Zustand Magnetfelder, die mit dem Magnetfeld des Permanentmagneten wechselwirken. Dadurch wirken Kräfte auf den Permanentmagneten, der zusammen mit der Wirkstange entlang ihrer Längsmittelachse verstellt wird. Mit anderen Worten sind die Spulen statisch bzw. nicht verstellbar in dem Aktuator angeordnet und die Wirkstange bewegt sich mit dem Permanentmagnet innerhalb des Aktuators. Eine Umkehrung der Kraftrichtung wird dabei durch eine Umpolung des Stroms in den Spulen und infolgedessen deren Magnetfelder erreicht.

Vorteilhafterweise können die Spulen in dem Aktuatorgehäuse um die Wirkstange herum und der Permanentmagnet kann innerhalb den Spulen verschiebbar angeordnet sein. Die Spulen sind in Bezug auf die Wirkstange axial benachbart zueinander und koaxial zu der Wirkstange ausgerichtet. Der Permanentmagnet liegt dabei innerhalb der Spulen in einem von den Spulen gebildeten zylindrischen Hohlraum und ist in Bezug auf die Wirkstange radial zwischen der Wirkstange und den Spulen aufgenommen. Vorteilhafterweise kann vorgesehen sein, dass im nicht bestromten Zustand des Aktuators bzw. im nicht bestromten Zustand der Spulen die Wirkstange durch den Permanentmagneten in einer bevorzugten Drehwinkellage gehalten ist. Vorteilhafterweise kann im nicht bestromten Zustand des Aktuators bzw. im nicht bestromten Zustand der Spulen die Wirkstange auch verschiebefest in dem Aktuatorgehäuse gehalten sein.

Vorteilhafterweise kann der Aktuator einen Hall-Sensor zur Positionserkennung der Wirkstange aufweisen, der in oder an dem Aktuatorgehäuse befestigt ist und mit dem Permanentmagneten zusammenwirkt. Vorteilhafterweise kann der Hall-Sensor von dem Aktuatorgehäuse eingefasst bzw. in das Aktuatorgehäuse aus Kunststoff eingespritzt sein. Der Hall-Sensor ist dadurch ein integraler Bestandteil des Aktuators. Durch den Hall-Sensor kann die aktuelle Position der Wirkstange bestimmt werden und dadurch die Verstellgenauigkeit der Verstellvorrichtung verbessert werden. Dadurch kann insgesamt die Funktion des Verdichters sichergestellt werden.

Vorteilhafterweise kann der Aktuator eine Führungshülse aufweisen, in der das Axialende der Wirkstange aufgenommen ist. Die Wirkstange ist dann innerhalb der Führungshülse mittels zweier Lagerstellen radial geführt. Zweckgemäß ist die Führungshülse aus austenitischem, magnetisch nichtleitendem Metall geformt. Die Führungshülse ragt dabei mit der einen innenliegenden Lagerstelle aus dem Aktuatorgehäuse hinaus und ist zum Aufnehmen in dem Verdichtergehäuse des Verdichters vorgesehen. Mit anderen Worten ist eine der Lagerstellen außerhalb des Aktuatorgehäuses angeordnet und von einem außerhalb des Aktuatorgehäuses angeordneten Teil der Führungshülse ummantelt.

Um ein Herausfallen der Wirkstange aus der Führungshülse zu verhindern, kann an einem von dem Aktuatorgehäuse abgewandten Ende der Führungshülse ein Axialanschlag vorgesehen sein. Der Axialanschlag kann beispielweise ein nach innen gerichteter Kragen sein, der einen axialen Anschlag für die Wirkstange bildet. Besonders vorteilhaft ist es, wenn der Kragen gleichzeitig auch als axiale Fixierung der Führungshülse dient.

Bei der Montage des Aktuators in dem Verdichtergehäuse ragt dann die Führungshülse und entsprechend die in dieser angeordnete Lagerstelle in das Verdichtergehäuse hinein. Die Führungshülse kann dabei in einer weiteren Hülse aufgenommen sein, die dann bereichsweise in einem Gehäuseteil aufgenommen ist. Das Aktuatorgehäuse ist dann aus dem Gehäuseteil und der Hülse gebildet. Das Gehäuseteil kann dabei aus Kunststoff bestehen und das Aktuatorgehäuse durch Umspritzen der Hülse mit dem Gehäuseteil hergestellt sein.

Die Erfindung betrifft auch ein Verfahren zur Montage des oben beschriebenen Verdichters, der einen Einlassstutzen und eine Spirale umfasst. Dabei werden die Wirkstange und der Aktuator zu einer Aktuatoranordnung montiert und die Wirkstange wird relativ zu dem Aktuator in eine gewünschte Drehwinkellage gebracht. Die Wirkstange wird dann in einen dafür vorgesehenen Durchbruch in dem Einlassstutzen von außen und quer zur Strömungsrichtung eingeschoben, bis ein Aktuatorgehäuse des Aktuators an dem Verdichtergehäuse anliegt. Das Aktuatorgehäuse und das Verdichtergehäuse werden dann miteinander festverbunden - beispielsweise verschraubt. Eine Koppelstange wird in den Einlassstutzen von einer der Spirale zugewandten Seite und in Strömungsrichtung eingeschoben und mit der Wirkstange wirkend verbunden - beispielsweise verschraubt. Die Verstelleinheit wird an der Spirale an einer dem Einlassstutzen zugewandten Seite montiert. Anschließend werden die Spirale mit dem Einlassstutzen fest und gleichzeitig die Koppelstange mit der Verstelleinheit wirkend verbunden. Durch das erfindungsgemäße Verfahren kann die Montage des Verdichters deutlich vereinfacht werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: eine Ansicht eines erfindungsgemäßen Verdichters;
- Fig. 2 und 3: Teilansichten des erfindungsgemäßen Verdichters in einer ersten Ausführungsform;
- Fig. 4: eine Schnittansicht des erfindungsgemäßen Verdichters in einer zweiten Ausführungsform;
- Fig. 5 und 6: eine Teilansicht und eine Schnittansicht des erfindungsgemäßen Verdichters in einer dritten Ausführungsform;
- Fig. 7 und 8: eine Teilansicht und eine Schnittansicht des erfindungsgemäßen Verdichters in einer vierten Ausführungsform;
- Fig. 9: eine Schnittansicht einer erfindungsgemäßen Aktuatoranordnung für den erfindungsgemäßen Verdichter.

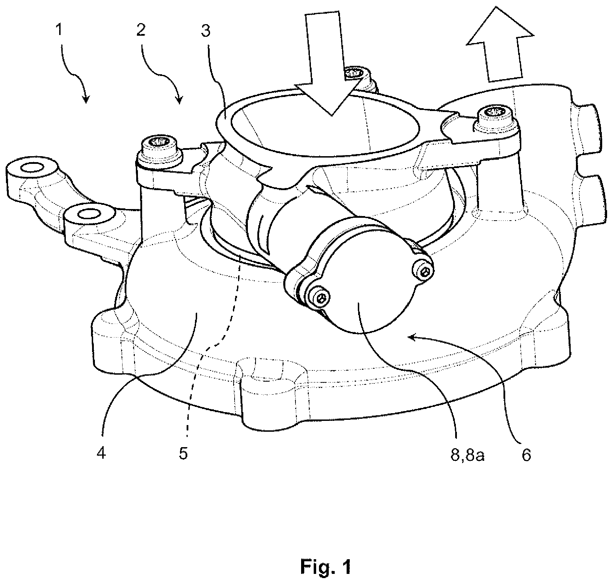

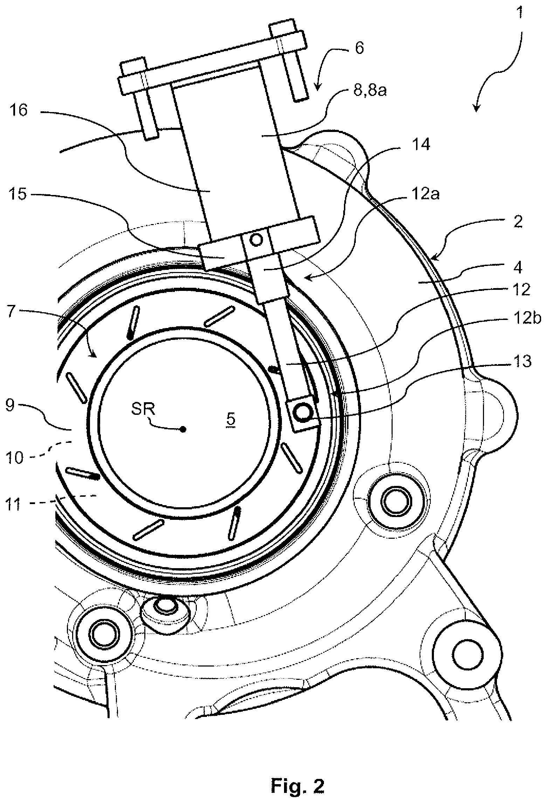

Fig. 1 zeigt eine Ansicht eines erfindungsgemäßen Verdichters 1. Der Verdichter 1 weist ein Verdichtergehäuse 2 auf, das einen Einlassstutzen 3 und eine Spirale 4 mit einem um eine Drehachse drehbaren Verdichterrad - hier nicht sichtbar-umfasst. Der Einlassstutzen 3 und die Spirale 4 sind miteinander festverbunden, wobei zwischen dem Einlassstutzen 3 und der Spirale 4 ein Ladeluftdurchlass 5 gebildet ist. Die Ladeluft strömt dann in den Einlassstutzen 3 ein und wird über den Ladeluftdurchlass 5 zu dem Verdichterrad geleitet. Nach dem Verdichterrad strömt die verdichtete Ladeluft über die Spirale aus dem Verdichtergehäuse 2 raus. Die Strömung der Ladeluft ist in Fig. 1 mit Pfeilen angedeutet. Der Verdichter 1 umfasst zudem eine Verstellvorrichtung 6, die eine Verstelleinheit 7 - hier nicht sichtbar - und einen Aktuator 8 - hier einen linearen Steller 8a - aufweist. Der Aufbau der Verstellvorrichtung 6 wird im Folgenden anhand Fig. 2 bis Fig. 8 näher erläutert.

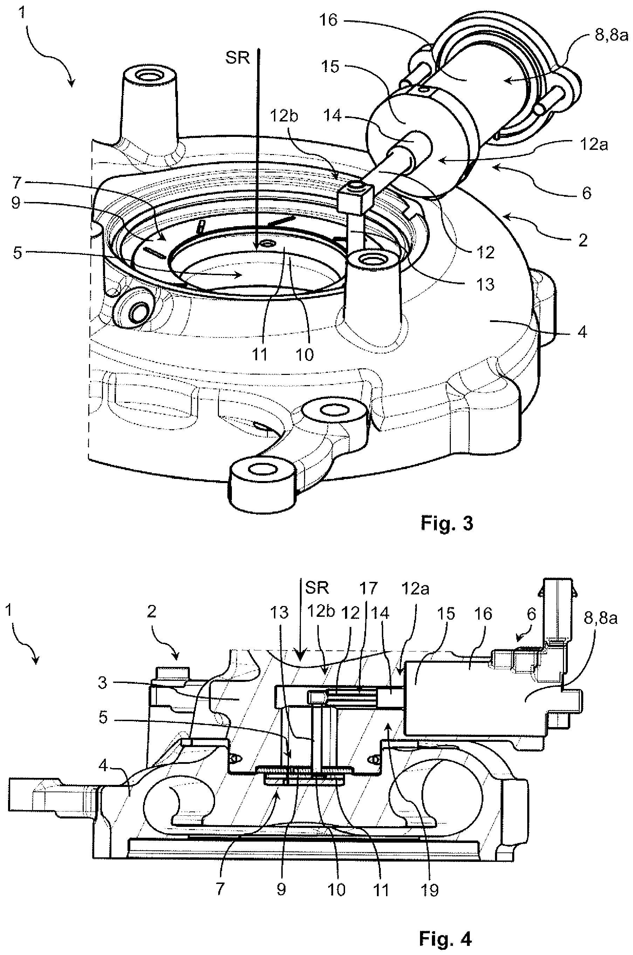

Fig. 2 und Fig. 3 zeigen Teilansichten - ohne den Einlassstutzen 3 - des erfindungsgemäßen Verdichters 1 in einer ersten Ausführungsform. Wie hier erkennbar, ist die Verstelleinheit 7 in dem Ladeluftdurchlass 5 quer zur Strömungsrichtung SR der Ladeluft angeordnet. In diesem Ausführungsbeispiel ist die Verstelleinheit 7 durch einen Verstellring 9, einen Lagerring 10 und mehrere dazwischen gelagerte Blendenelemente 11 gebildet. Wird der Verstellring 9 gegenüber dem Lagerring 10 verdreht, so können die Blendenelemente 11 radial in Bezug auf die Strömungsrichtung SR nach innen ausfahren und radial in Bezug auf die Strömungsrichtung SR nach außen einfahren und dadurch der durchströmbare Querschnitt des Ladeluftdurchlasses 5 geändert werden. Grundsätzlich sind jedoch auch andere Ausführungsformen der Verstelleinheit 7 denkbar.

Die Verstelleinheit 7 kann von dem Aktuator 8 aktiv in eine der mehreren Stellungen verstellt werden, in denen der durchströmbare Querschnitt des Ladeluftdurchlasses 5 unterschiedlich ist. Dazu ist der Aktuator 8 mit der Verstelleinheit 7 über eine Wirkstange 12 und eine Koppelstange 13 wirkend verbunden. Die Wirkstange 12 ist dabei mit ihrem Axialende 12a in dem Aktuator 8 gelagert und kann von dem Aktuator 8 aktiv betätigt werden. Die Wirkstange 12 ist dabei quer zur Strömungsrichtung SR und mit einem axialen Versatz in Bezug auf die Strömungsrichtung SR zu der Verstelleinheit 7 angeordnet. Die Koppelstange 13 ist in Strömungsrichtung SR ausgerichtet und verbindet die Wirkstange 12 mit der Verstelleinheit 7. Die Koppelstange 13 ist dazu einseitig mit der Wirkstange 12 und andersseitig mit dem Verstellring 9 verbunden. So kann die Koppelstange 13 mit der Wirkstange 12 beispielsweise verschraubt oder in die Wirkstange 12 eingeschraubt sein und in eine Öffnung des Verstellrings 9 eingreifen. Alternativ kann die Koppelstange 13 mit dem Verstellring 9 verschraubt oder in den Verstellring eingeschraubt sein und in eine Öffnung der Wirkstange 12 eingreifen. Wird die Wirkstange 12 von dem Aktuator 8 betätigt und quer zur Strömungsrichtung SR verschoben, so wird über die Koppelstange 13 der Verstellring 9 gegenüber dem Lagerring 10 verdreht. Entsprechend wird auch der durchströmbare Querschnitt des Ladeluftduchlasses 5 verändert.

Die Wirkstange 12 ist dabei in dem Aktuator 8 mittels einer Lagerstelle 14 verschiebbar gelagert. Die Lagerstelle 14 vereinfacht das Führen der Wirkstange 12, wodurch die Verstellgenauigkeit der Verstellvorrichtung 6 verbessert und dadurch die Funktion des Verdichters 1 sichergestellt werden kann. Die Lagerstelle 14 ist dabei in einem Bodenbereich 15 eines Aktuatorgehäuses 16 des Aktuators 8 angeordnet und ragt aus dem Aktuatorgehäuse 16 nach außen. Ist der Aktuator 8 an dem Verdichtergehäuse 2 festgelegt - wie in Fig. 1 gezeigt ist, - so ragt die Lagerstelle 14 weiter als das Aktuatorgehäuse 16 in das Verdichtergehäuse 2 hinein.

Fig. 4 zeigt eine Schnittansicht des erfindungsgemäßen Verdichters 1 in einer zweiten Ausführungsform. Im Unterschied zu der ersten Ausführungsform ist die Wirkstange 12 über eine Nut-Feder-Verbindung 17 drehfest und quer zur Strömungsrichtung SR verschiebbar in der Lagerstelle 14 gelagert. Dadurch kann vorteilhafterweise ein Kippen der Wirkstange 12 verhindert und dadurch die Verstellgenauigkeit der Verstellvorrichtung 6 verbessert und die Funktion des Verdichters 1 sichergestellt werden. Im Übrigen entspricht die zweite Ausführungsform der ersten Ausführungsform des Verdichters 1.

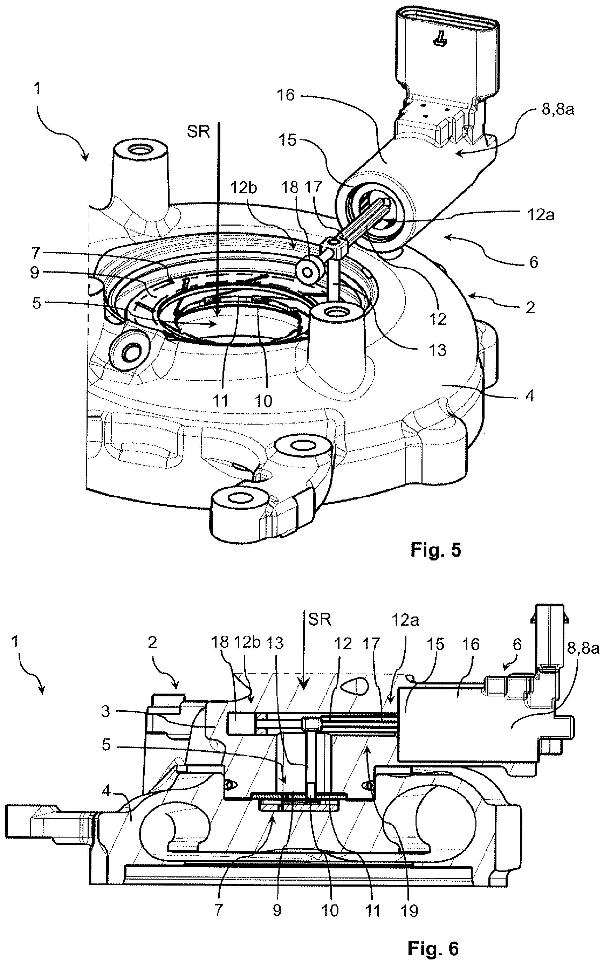

Fig. 5 zeigt eine Teilansicht - ohne den Einlassstutzen 3 - und Fig. 6 zeigt eine Schnittansicht des erfindungsgemäßen Verdichters 1 in einer dritten Ausführungsform. Abweichend zu der zweiten Ausführungsform des Verdichters 1 ist hier die Lagerstelle 14 in Form einer Lagerbuchse 18 ausgebildet, die an einem dem Aktuator 8 gegenüberliegenden Axialende 12b der Wirkstange 12 angeordnet ist. Die Lagerbuchse 18 ist dabei fest in dem Verdichtergehäuse 2 angeordnet und nimmt die Wirkstange 12 verschiebbar auf. Die Nut-Feder-Verbindung 17 ist hier zwischen der Wirkstange 12 und den weiteren Teilen des Aktuators 8 hergestellt, wodurch die Wirkstange 12 drehsicher in dem Aktuator 8 gelagert ist. Im Übrigen entspricht die dritte Ausführungsform der zweiten Ausführungsform des Verdichters 1.

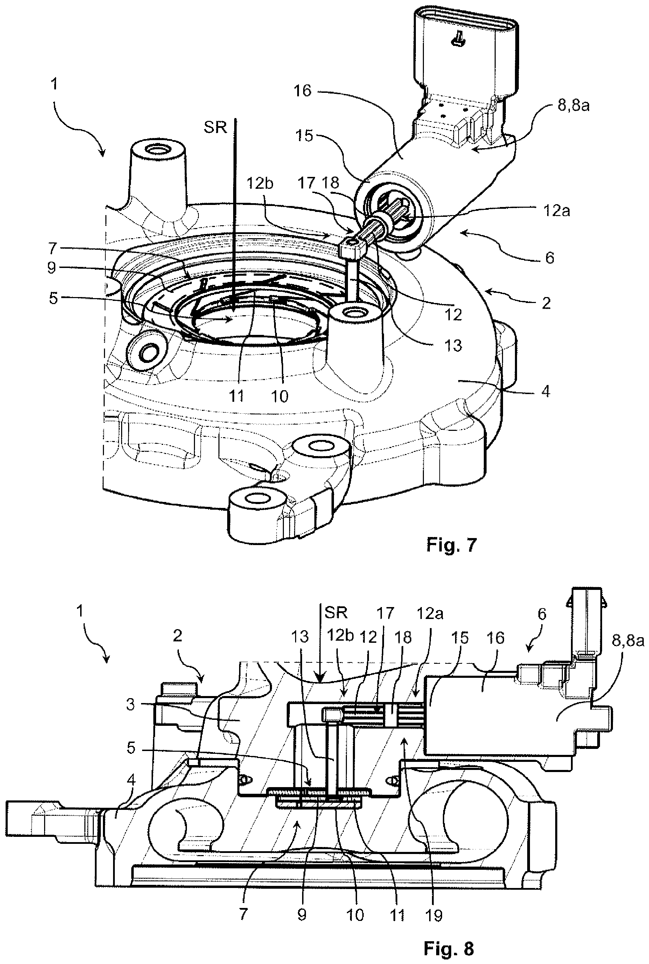

Fig. 7 zeigt eine Teilansicht - ohne den Einlassstutzen 3 - und Fig. 8 zeigt eine Schnittansicht des erfindungsgemäßen Verdichters 1 in einer vierten Ausführungsform. Im Unterschied zu der zweiten Ausführungsform des Verdichters 2 ist hier die Lagerstelle 14 in Form der Lagerbuchse 18 ausgebildet, die zwischen der Koppelstange 13 und dem Aktuator 8 angeordnet ist. Durch die Nut-Feder-Verbindung 17 ist die Wirkstange 12 in dem Aktuator 8 drehsicher aufgenommen. Im Übrigen entspricht die vierte Ausführungsform der zweiten Ausführungsform des Verdichters 1.

Wie in Fig. 4, Fig. 6 und Fig. 8 besonders gut erkennbar, ist die Wirkstange 12 durch einen Durchbruch 19 in dem Einlassstutzen 3 in das Verdichtergehäuse 2 geführt. Das Aktuatorgehäuse 16 des Aktuators 8 liegt dabei an dem Verdichtergehäuse 2 an und ist bereichsweise in dem Aufnahmebereich des Verdichtergehäuses 2 aufgenommen. Der Aufnahmebereich ist dabei integral an dem Verdichtergehäuse 2 ausgeformt und nimmt den Aktuator 8 axial in Bezug auf die Wirkstange 12 bereichsweise auf. Der Durchbruch 19 ist dabei um die Wirkstange 12 abgedichtet, so dass eine Leckage von Ladeluft aus dem Verdichter 2 verhindert ist. Vorteilhafterweise ist der Durchbruch 19 durch eine statische, zwischen Verdichtergehäuse 2 und Aktuatorgehäuse 16 eingeklemmte Dichtung abgedichtet.

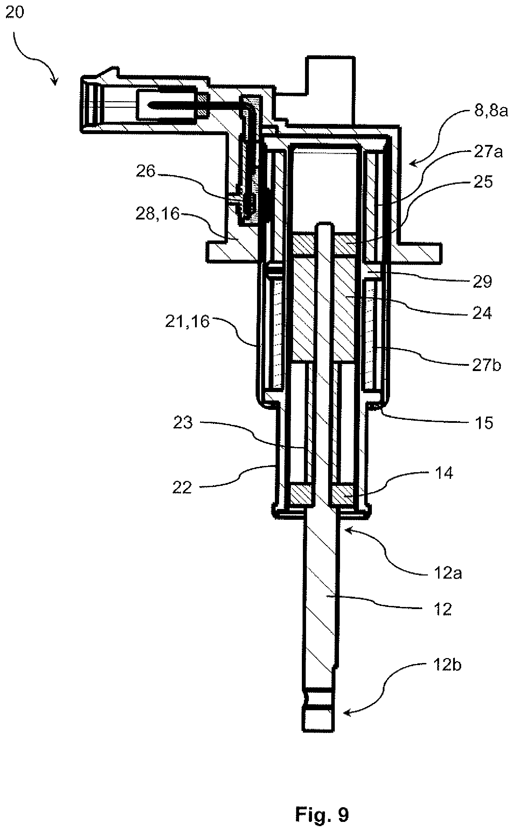

Fig. 9 zeigt nun eine erfindungsgemäße Aktuatoranordnung 20, die den Aktuator 8 und die Wirkstange 12 umfasst. Der Aktuator 8 umfasst eine Hülse 21 aus einem ferromagnetischen Material und ein Gehäuseteil 28 aus Kunststoff, die das Aktuatorgehäuse 16 bilden. Das Gehäuseteil 28 ist dabei auf die Hülse 21 aufgespritzt und ummantelt die Hülse 21 axial in Bezug auf die Wirkstange 12 bereichsweise. Der Aktuator 8 ist somit bereichsweise durch das Gehäuseteil 28 und bereichsweise durch die Hülse 21 nach außen begrenzt. Der Bodenbereich 15 des Aktuatorgehäuses 16 ist bei dieser Ausführung des Aktuators 8 durch die Hülse 21 gebildet. An dem Gehäuseteil 28 ist zudem ein Aktuatorflansch integral ausgebildet, der zum Festlegen des Aktuators 8 an dem Verdichtergehäuse 2 dient.

In der Hülse 21 ist eine tiefgezogene Führungshülse 22 eingesteckt, in der die Wirkstange 12 mit ihrem Axialende 12a aufgenommen ist. Die Führungshülse 22 ist aus Metall geformt. Auf der Wirkstange 12 sind innerhalb der Führungshülse 22 die Lagerstelle 14, eine Abstandshülse 23, ein Permanentmagnet 24 bzw. ein Anker und eine weitere Lagerstelle 25 festgelegt. Die Lagerstellen 14 und 25 sind hier in Form von Lagerbuchsen ausgebildet, die mit der Wirkstange 12 festverbunden sind und in der Führungshülse 22 mit der Wirkstange 12 gleiten. Die Abstandshülse 23 trennt dabei den Permanentmagneten 24 und die Lagerstelle 14 axial in Bezug auf die Wirkstange 12 voneinander und die weitere Lagerstelle 25 ist zu dem Permanentmagnet 24 benachbart und von der Abstandshülse 24 abgewandt angeordnet. Mit anderen Worten sind die Lagerstellen 14 und 25 durch die Abstandshülse 23 und den Permanentmagneten 24 voneinander beabstandet angeordnet. Dabei liegt die Lagerstelle 14 axial in Bezug auf die Wirkstange 12 an einer Schulter der Wirkstange 12 an. Die Abstandshülse 23 vergrößert den Abstand zwischen den Lagerstellen 14 und 25 und reduziert dadurch wirkungsvoll die radiale Auslenkung der Wirkstange 12.

Die Wirkstange 12 wird innerhalb der Führungshülse 22 durch die Lagerstelle 14 und die weitere Lagerstelle 25 radial geführt. Die Führungshülse 22 bildet hier also eine Radialführung der Wirkstange 12, in der die Wirkstange 12 entlang ihrer Längsmittelachse und quer zur Strömungsrichtung SR verschiebbar gelagert ist. Die Führungshülse 22 ragt dabei aus dem Aktuatorgehäuse 16 bzw. aus dem Bodenbereich 15 des Aktuatorgehäuses 16 bzw. aus der Hülse 21 des Aktuatorgehäuses 16 heraus, so dass sie eine verlängerte radiale Führungsfläche für die Lagerstelle 14 bildet.

Ferner umfasst der Aktuator 8 eine Spule 27a mit rechtsweisender Wicklung und eine Spule 27b mit linksweisender Wicklung auf, die in Reihe elektrisch miteinander verschaltet sind. Die Spulen 27a und 27b sind um die Wirkstange 12 angeordnet und wirken im bestromten Zustand des Aktuators 8 mit dem Permanentmagnet 24 zusammen. Die Spulen 27a und 27b sind dabei zueinander benachbart und koaxial zu der Wirkstange 12 angeordnet. Der Permanentmagnet 24 ist dabei radial in Bezug auf die Wirkstange 12 zwischen den Spulen 27a und 27b und der Wirkstange 12 angeordnet und ist an der Wirkstange 12 festgelegt. Die Spulen 27a und 27b sind dabei auf einem hülsenförmigen Spulenträger 29 angeordnet, der beispielweise aus Kunststoff geformt ist. In dem gezeigten Ausführungsbeispiel ist die Spule 27a mit rechtsweisender Wicklung durch einen außen auf dem Spulenträger 29 ausgebildeten Kragen von der Spule 27b mit linksweisender Wicklung axial in Bezug auf die Wirkstange 12 beabstandet. Der Spulenträger 29 und die Spulen 27a und 27b sind radial außen in Bezug auf die Wirkstange 12 von der Hülse 21 umgeben.

Im bestromten Zustand der Spulen 27a und 27b wechselwirken die durch die Spulen 27a und 27b erzeugten Magnetfelder mit dem Magnetfeld des Permanentmagneten 24 derart, dass eine resultierende Kraft auf den Permanentmagneten 24 wirkt und eine Verstellung der Wirkstange 12 entlang ihrer Längsmittelachse bewirkt. Eine Umkehrung der Kraftrichtung wird dabei durch eine Umpolung des Stroms in den Spulen 27a und 27b und infolgedessen eine Umorientierung des resultierenden Magnetfels erreicht. In diesem Ausführungsbeispiel sind die Spulen 27a und 27b richtungsabweichend gewickelt und werden gleichgepolt bestromt. Alternativ können die Spulen 27a und 27b richtungsgleich gewickelt sein und abweichend gepolt bestromt werden.

Der Aktuator 8 weist zudem einen Hall-Sensor 26 zur Positionserkennung der Wirkstange 12 auf, der an dem Aktuatorgehäuse 16 befestigt bzw. in dem Aktuatorgehäuse 16 aufgenommen ist und mit dem Permanentmagneten 24 zusammenwirkt. Im nicht bestromten Zustand des Aktuators 8 ist die Wirkstange 12 in einer ersten Endlage positioniert, in der das Axialende 12a maximal in das Aktuatorgehäuse 16 eingefahren ist. Der Permanentmagnet 24 ist dann unmittelbar an dem Hall-Sensor 26 angeordnet, so dass der Abstand zwischen dem Hall-Sensor 26 und dem Permanentmagnet 24 minimal und die in dem Hall-Sensor erzeugte Hallspannung maximal ist. In einer zweiten Endlage der Wirkstange 12 - wie in Fig. 9 gezeigt - ist die Wirkstange 12 maximal aus dem Aktuatorgehäuse 16 ausgefahren. Der Abstand zwischen dem Hall-Sensor 26 und dem Permanentmagneten 24 ist dann maximal und die in dem Hall-Sensor erzeugte Hallspannung minimal. Dadurch ist eine Positionserkennung der Wirkstange 12 möglich, wodurch die Verstellgenauigkeit der Wirkstange 12 und insgesamt der Verstellvorrichtung 7 verbessert sind. Das besondere dieser Anordnung ist, dass auf der Wirkstange 12 bereits der Permanentmagnet 24 zur Erzeugung einer Translation der Wirkstange 12 vorhanden ist, so dass für die Positionsbestimmung der Wirkstange 12 kein zusätzlicher Magnet erforderlich ist. Mit anderen Worten dient der Permanentmagnet 24 sowohl der Positionsbestimmung der Wirkstange 12, als auch dazu eine Translation der Wirkstange 12 innerhalb der Radialführung bzw. innerhalb des Aktuators 8 zu erzeugen.

Bei der Montage des Verdichters 1 werden dann unabhängig von der Ausführungsform des Verdichters 1 zuerst die Wirkstange 12 und der Aktuator 8 zu der Aktuatoranordnung 20 montiert. Die Wirkstange 12 wird dabei relativ zu dem Aktuator 8 in eine gewünschte Drehwinkellage gebracht. Dann wird die Wirkstange 12 in den Durchbruch 19 von außen und quer zur Strömungsrichtung SR eingeschoben, bis das Aktuatorgehäuse 16 an dem Verdichtergehäuse 2 anliegt. Nun werden das Aktuatorgehäuse 16 und das Verdichtergehäuse 2 fest miteinander verbunden. Danach wird die Koppelstange 13 in den Einlassstutzen 3 eingeschoben und mit der Wirkstange festverbunden. Die Verstelleinheit 7 wird unabhängig von den obigen Schritten in der Spirale 4 montiert. Anschließend werden die Spirale 4 mit dem Einlassstutzen 3 festverbunden und gleichzeitig die Koppelstange 13 mit der Verstelleinheit 7 in Eingriff gebracht.

Abhängig von der Ausführung der Lagerstelle 14 kann die Wirkstange 12 bereits beim Montieren der Aktuatoranordnung in Eingriff mit der Lagerstelle 14 gebracht werden. Alternativ kann die Lagerstelle 14 in dem Verdichtergehäuse 2 festgelegt sein und die Wirkstange 12 beim Einschieben in das Verdichtergehäuse 2 in Eingriff mit der Lagerstelle 14 gebracht werden.

## Patentansprüche

1. Verdichter (1) zum Verdichten von Ladeluft für einen Verbrennungsmotor oder eine Brennstoffzelle,
- wobei der Verdichter (1) ein Verdichtergehäuse (2) aufweist, in dem ein von Ladeluft in Strömungsrichtung (SR) durchströmbarer Ladeluftdurchlass (5) ausgebildet ist,
- wobei der Verdichter (1) eine Verstellvorrichtung (6) mit einer in dem Ladeluftdurchlass (5) quer zur Strömungsrichtung (SR) angeordneten Verstelleinheit (7) und mit einer Aktuatoranordnung (20) aufweist,
- wobei die Aktuatoranordnung (20) einen an dem Verdichtergehäuse (2) angeordneten Aktuator (8) und eine Wirkstange (12) aufweist,
- wobei der Aktuator (8) und die Verstelleinheit (7) über die Wirkstange (12) zusammenwirken, die aus dem Aktuator (8) quer zur Strömungsrichtung (SR) in das Verdichtergehäuse (2) hinein zu der Verstelleinheit (7) geführt ist, und
- wobei der Aktuator (8) die Verstelleinheit (7) über die Wirkstange (12) in mehrere verschiedene Stellungen verstellen kann, in denen der durchströmbare Querschnitt des Ladeluftdurchlasses (5) unterschiedlich ist,
**dadurch gekennzeichnet,**
**dass** die Verstellvorrichtung (6) wenigstens eine Lagerstelle (14) aufweist, die innerhalb des Verdichtergehäuses (2) angeordnet ist und die Wirkstange (12) aufnimmt.

2. Verdichter nach Anspruch 1,
**dadurch gekennzeichnet,**
- **dass** ein Aktuatorgehäuse (16) des Aktuators (8) mit einem Bodenbereich (15) an dem Verdichtergehäuse (2) anliegt, und
- **dass** die wenigstens eine Lagerstelle (14) an dem Bodenbereich (15) des Aktuatorgehäuses (16) angeordnet ist und aus dem Bodenbereich (15) hinausragt und in das Verdichtergehäuse (2) hineinragt.

3. Verdichter nach Anspruch 1 oder 2,
**dadurch gekennzeichnet,**
- **dass** die wenigstens eine Lagerstelle (14) in Form einer Lagerbuchse (18) ausgeführt ist, die an einem dem Aktuator (8) gegenüberliegenden Axialende (12b) der Wirkstange (12) diese umlaufend aufnimmt, oder
- **dass** die wenigstens eine Lagerstelle (14) in Form einer Lagerbuchse (18) ausgeführt ist, die zwischen dem Aktuator (8) und einem dem Aktuator (8) gegenüberliegenden Axialende (12b) der Wirkstange diese umlaufend aufnimmt.

4. Verdichter nach Anspruch 3,
**dadurch gekennzeichnet,**
- **dass** die Lagerbuchse (18) mit der Wirkstange (12) festverbunden oder auf der Wirkstange (12) ausgebildet ist und in dem Verdichtergehäuse (2) mit der Wirkstange (12) verschiebbar angeordnet ist, oder
- **dass** die Lagerbuchse (18) mit dem Verdichtergehäuse (2) festverbunden oder in dem Verdichtergehäuse (2) ausgebildet ist und die Wirkstange (12) in der Lagerbuchse (18) verschiebbar angeordnet ist.

5. Verdichter nach einem der Ansprüche 1 bis 4,
**dadurch gekennzeichnet,**
- **dass** die Verstelleinheit (7) und die Wirkstange (12) einen axialen Versatz in Bezug auf die Strömungsrichtung (SR) zueinander aufweisen,
- **dass** die Verstellvorrichtung (6) eine Koppelstange (13) umfasst, die parallel zur Strömungsrichtung (SR) und senkrecht zur Wirkstange (12) ausgerichtet ist, und
- **dass** die Koppelstange (13) die Wirkstange (12) und die Verstelleinheit (7) wirkend miteinander verbindet.

6. Verdichter nach einem der Ansprüche 1 bis 5,
**dadurch gekennzeichnet,**
- **dass** die Wirkstange (12) über eine Nut-Feder-Verbindung (17) drehfest und quer zur Strömungsrichtung (SR) verschiebbar in dem Aktuator (8) gelagert ist, und/oder
- **dass** die Koppelstange (13) über eine Führung in dem Verdichtergehäuse (2) kippsicher angeordnet ist und dadurch die Wirkstange (12) drehfest und quer zur Strömungsrichtung (SR) verschiebbar in dem Verdichtergehäuse (2) gelagert ist.

7. Aktuatoranordnung (20) für den Verdichter (1) nach einem der vorangehenden Ansprüche,
- wobei die Aktuatoranordnung (20) den Aktuator (8) und die Wirkstange (12) umfasst, die mit einem Axialende (12a) in ein Aktuatorgehäuse (16) des Aktuators (8) hineinragt,
- wobei auf dem Axialende (12a) der Wirkstange (12) ein Permanentmagnet (24) befestigt ist,
- wobei der Aktuator (8) zwei Spulen (27a, 27b) aufweist, und
- wobei die Spulen (27a, 27b) im bestromten Zustand des Aktuators (8) mit dem Permanentmagneten (24) zusammenwirken, so dass die Wirkstange (12) entlang ihrer Längsmittelachse verstellbar ist.

8. Aktuatoranordnung nach Anspruch 7,
**dadurch gekennzeichnet,**
**dass** in einem nicht bestromten Zustand des Aktuators (8) die Wirkstange (12) durch den Permanentmagneten (24) in einer bevorzugten Drehwinkellage gehalten ist.

9. Aktuatoranordnung nach Anspruch 7 oder 8,
**dadurch gekennzeichnet,**
**dass** die Spulen (27a, 27b) in dem Aktuatorgehäuse (16) um die Wirkstange (12) herum angeordnet sind und der Permanentmagnet (24) innerhalb der Spulen (27a, 27b) verschiebbar angeordnet ist.

10. Aktuatoranordnung nach Anspruch 9,
**dadurch gekennzeichnet,**
**dass** der Aktuator (8) einen Hall-Sensor (26) zur Positionserkennung der Wirkstange (12) aufweist, der in oder an dem Aktuatorgehäuse (16) befestigt ist und mit dem Permanentmagnet (24) zusammenwirkt.

11. Aktuatoranordnung nach Anspruch 10,
**dadurch gekennzeichnet,**
**dass** der Hall-Sensor (26) von dem Aktuatorgehäuse (16) eingefasst ist.

12. Aktuatoranordnung nach einem der Ansprüche 7 bis 11,
**dadurch gekennzeichnet,**
- **dass** der Aktuator (8) eine Führungshülse (22) aufweist, in der das Axialende (12a) der Wirkstange (12) aufgenommen ist,
- **dass** die Wirkstange (12) innerhalb der Führungshülse (22) mittels zweier Lagerstellen (14, 25) radial geführt ist, und
- **dass** die Führungshülse (22) mit der einen innenliegenden Lagerstelle (14) aus dem Aktuatorgehäuse (16) hinausragt und zum Aufnehmen in dem Verdichtergehäuse (2) des Verdichters (1) vorgesehen ist.

13. Verfahren zur Montage des Verdichters (1) nach einem der vorangehenden Ansprüche, wobei der Verdichter (1) einen Einlassstutzen (3) und eine Spirale (4) umfasst,
- wobei die Wirkstange (12) und der Aktuator (8) zu einer Aktuatoranordnung (20) montiert und die Wirkstange (12) relativ zu dem Aktuator (8) in eine gewünschte Drehwinkellage gebracht wird;
- wobei die Wirkstange (12) in einen dafür vorgesehenen Durchbruch (19) in dem Einlassstutzen (3) von außen und quer zur Strömungsrichtung (SR) eingeschoben wird, bis ein Aktuatorgehäuse (16) des Aktuators (8) an dem Verdichtergehäuse (2) anliegt;
- wobei das Aktuatorgehäuse (16) und das Verdichtergehäuse (2) miteinander festverbunden werden;
- wobei eine Koppelstange (13) in den Einlassstutzen (3) von einer der Spirale (4) zugewandten Seite und in Strömungsrichtung (SR) eingeschoben und mit der Wirkstange (12) wirkend verbunden wird;
- wobei die Verstelleinheit (7) an der Spirale (4) an einer dem Einlassstutzen (3) zugewandten Seite montiert wird; und
- wobei die Spirale (4) mit dem Einlassstutzen (3) fest und gleichzeitig die Koppelstange (13) mit der Verstelleinheit (7) wirkend verbunden werden.
